# EUROPEAN PATENT APPLICATION

(11) **EP 4 553 481 A1**
(43) Date of publication of application: **14.05.2025**
(21) Application number: 24807394.2
(22) Date of filing: 24.04.2024
(51) Int. Cl.: G01N 1/38, G01N 21/25, G01N 27/22

(54) **DEVICE FOR MEASURING STATE OF SOLUTION**

(30) Priority: 16.05.2023 KR 20230063109
(71) Applicant: LG Chem, Ltd., Yeongdeungpo-gu Seoul 07336 (KR)
(72) Inventor: KWON, Youbin, Daejeon 34122 (KR); CHOI, Jaegil, Daejeon 34122 (KR); SONG, Youngsoo, Daejeon 34122 (KR); IM, Ye Hoon, Daejeon 34122 (KR)
(74) Representative: Plasseraud IP
(86) International application number: PCT/KR2024/005511
(87) International publication number: WO 2024/237515

(57) **Abstract**

Disclosed is a device for measuring a state of a solution.

The device for measuring a state of a solution includes: a probe having a measuring unit having at least one surface open to measure characteristics of the solution; a support part fixed to an outer circumferential surface of the probe; and a baffle configured to be mounted on the support part and surround at least a portion of a periphery of the measuring unit and prevent a flow of the solution around the measuring unit, in which the baffle is mounted on the support part via a link mechanism, and a distance between the probe and the baffle is adjustable by the link mechanism.

## Description

### [Technical Field]

### CROSS-REFERENCE TO RELATED APPLICATION

This application claims priority to and the benefit of Korean Patent Application No. 10-2023-0063109 filed in the Korean Intellectual Property Office on May 16, 2023, the entire contents of which are incorporated herein by reference.

The present disclosure relates to a device for measuring a state of a solution, and more particularly, to a device for measuring a state of a solution that has a baffle installed around a probe for measuring the state of the solution to stabilize a flow of the solution inside the probe, thereby preventing a measurement deviation from occurring.

### [Background Art]

3-hydropropionic acid (3-HP) is a platform compound that may be converted into many other useful chemicals including acrylic acid, and therefore may be widely applied to the production of pigments, paints, fibers, etc. Such 3-HP is a representative biodegradable material that may be produced by fermenting Escherichia coli.

The E. coli is cultured and fermented in a culture medium inside a reactor. A spectrometer is installed inside the reactor to measure the concentration, etc., of the E. coli in the culture medium in real time. In addition, in order to predict the state of the E. coli, various measurement devices may be installed inside the reactor to measure the state (concentration, capacitance, inductance, etc.) of the culture medium. These measurement devices are usually configured to measure the state of the culture medium flowing through a measuring unit in real time.

A stirring device may also be installed inside the reactor culturing the E. coli. The stirring device is configured to stir the culture medium and supply oxygen to the E. coli in the culture medium. When the stirring device operates and stirs the culture medium, bubbles, etc., may be generated in the culture medium, and the generated bubbles may flow into the measuring unit of the measurement device together with the culture medium. In addition, a flow rate inside the measuring unit may increase excessively due to the stirring, and when the flow rate inside the measuring unit increases excessively, a flow deviation may occur in the measuring unit.

In this way, when the flow rate inside the measuring unit is excessively fast, or when bubbles exist in the measuring unit or pass through the measuring unit, the state of the culture medium measured by the measurement device may not be uniform. In other words, a deviation may occur in the state of the culture medium measured by the measurement device.

The above information disclosed in this Background Art is only for enhancement of understanding of the background of the invention and therefore it may contain information that does not form the prior art that is already known to a person of ordinary skill in the art to which this technology pertains.

### [Disclosure]

### [Technical Problem]

The present disclosure attempts to provide a device for measuring a state of a solution that has a baffle installed around a probe measuring the state of the solution to stabilize a flow of the solution around and inside the probe.

### [Technical Solution]

According to an embodiment of the present disclosure, a device for measuring a state of a solution includes: a probe having a measuring unit having at least one surface open to measure characteristics of the solution; a support part fixed to an outer circumferential surface of the probe; and a baffle configured to be mounted on the support part and surround at least a portion of a periphery of the measuring unit and prevent a flow of the solution around the measuring unit, in which the baffle is mounted on the support part via a link mechanism, and a distance between the probe and the baffle is adjustable by the link mechanism.

The support part may include first and second support parts that are coupled to each other to be relatively movable in a longitudinal direction thereof, the first support part may be detachably fixed to the outer circumferential surface of the probe, and the second support part may slide in the longitudinal direction with respect to the first support part to move the baffle between a folded position and an unfolded position via the link mechanism.

The first support part may include: a support plate configured to define one end of the first support part and support one end of the probe to prevent the probe from being separated to one side; at least one fixing ring configured to be arranged spaced apart from each other on the other side of the support plate and guide sliding of the second support part; and a first support pillar connected to the support plate and the at least one fixing ring to connect the support plate and the at least one fixing ring to each other.

The at least one fixing ring may include: a first fixing ring arranged spaced apart from the support plate near the support plate; a second fixing ring defining the other end of the first support part; and a third fixing ring arranged between the first fixing ring and the second fixing ring.

A first pillar groove may be formed at a position on a side surface of the support plate that is different from the first support pillar in a circumferential direction, and a second pillar groove may be formed on an inner circumferential surface of the second fixing ring corresponding to the first pillar groove in the circumferential direction.

The side surface of the support plate may be formed as an inclined surface.

The second support part may include: a ring handle arranged on the other side of a fixing ring on the most other side of the at least one fixing ring; and a second support pillar coupled to the ring handle, and extending to one side in a longitudinal direction to be guided by the at least one fixing ring, and the link mechanism may be configured to be mounted on the second support pillar and move the baffle between the folded position and the unfolded position.

The link mechanism may be mounted on the second support pillar so that when the ring handle is pushed to contact the fixing ring on the most other side, the baffle is positioned at the unfolded position, and when the ring handle is pulled to be separated from the fixing ring on the most other side, the baffle is positioned at the folded position.

The link mechanism may include: a first link mounted on the second support pillar to be rotatable about a direction perpendicular to the longitudinal direction of the second support pillar; a second link rotatably mounted on the first link and having a baffle mounted thereon; and a third link spaced apart from the first link and arranged adjacent to the support plate, and rotatably connected to the second link and the second support pillar, respectively.

At least one of the first and third links may be caught by at least one of the at least one fixing ring to position the baffle at the unfolded position.

The third link may position the baffle at the folded position by the support plate.

The probe may be mounted in a reactor through a mounting hole with the support part mounted on the outer circumferential surface thereof, and the probe may be inserted into the mounting hole at the position where the baffle is folded, and the probe may be positioned at the position where the baffle is unfolded while mounted in the reactor, so the measuring unit is configured to measure the characteristics of the solution.

### [Advantageous Effects]

According to the present disclosure, by installing the baffle around the probe measuring the state of the solution through the support part, it is possible to stabilize the flow of the solution around the probe and inside the probe and reduce the flow rate. Therefore, it is possible to reduce the measurement deviation of the state of the solution.

Since the baffle may be folded with respect to the probe, the device for measuring a state of a solution can be installed inside the reactor through the mounting hole without increasing the size of the mounting hole. In addition, since the baffle may be unfolded while the device for measuring a state of a solution is mounted inside the reactor, it is possible to control the flow of the solution over a wide area.

Other effects that may be obtained or are predicted by an exemplary embodiment will be explicitly or implicitly described in a detailed description of an exemplary embodiment. That is, various effects that are predicted according to an exemplary embodiment will be described in the following detailed description.

### [Description of the Drawings]

Exemplary embodiments of the present specification may be better understood by referring to the following description in conjunction with the accompanying drawings, where like reference numerals refer to identical or functionally similar elements.
FIG. 1 is a schematic diagram of a probe according to an exemplary embodiment of the present disclosure.
FIG. 2 is a perspective view of a support part of a device for measuring a state of a solution according to an exemplary embodiment of the present disclosure.
FIG. 3 is a perspective view of a first support part of the support part illustrated in FIG. 2.
FIG. 4 is a perspective view of a second support part of the support part illustrated in FIG. 2.
FIG. 5 is a front view and a plan view illustrating an unfolded state of the support part illustrated in FIG. 2.
FIG. 6 is a front view and a plan view illustrating a folded state of the support part illustrated in FIG. 2.
FIG. 7 is a schematic diagram illustrating a portion of the device for measuring a state of a solution according to an exemplary embodiment of the present disclosure in the unfolded state and folded state.
FIG. 8 is a schematic diagram illustrating that the device for measuring a state of a solution according to an exemplary embodiment of the present disclosure is mounted on a reactor.
FIG. 9 is an enlarged view of part 'A' of FIG. 8.
FIG. 10 is a diagram illustrating a flow rate around a probe when a device for measuring a state of a solution according to the related art is mounted on a reactor.
FIG. 11 is a diagram illustrating a flow rate around the probe when the device for measuring a state of a solution according to an exemplary embodiment is mounted on a reactor and a baffle is folded.
FIG. 12 is a diagram illustrating the flow rate around the probe when the device for measuring a state of a solution according to an exemplary embodiment of the present disclosure is mounted on the reactor and the baffle is unfolded.

It should be understood that the drawings referenced above are not necessarily drawn to scale, and present rather simplified representations of various preferred features illustrating the basic principles of the present disclosure. For example, specific design features of the present disclosure, including specific dimensions, direction, position, and shape, will be determined in part by specific intended applications and use environments.

### [Mode for Invention]

The terminology used herein is for the purpose of describing particular exemplary embodiments only, and is not intended to limit the present disclosure. As used herein, singular forms are intended to also include plural forms, unless the context clearly dictates otherwise. The terms "includes" and/or "including," specify the cited features, integers, steps, operations, elements, and/or the presence of components when used herein, but it will also be understood that these terms do not exclude the presence or addition of one or more of other features, integers, steps, operations, elements, components, and/or groups thereof. As used herein, the term "and/or" includes any one or all combinations of the associated listed items.

A device for measuring a state of a solution according to an exemplary embodiment of the present disclosure includes a probe that has a measuring unit with at least one surface open to measure characteristics of the solution, a support part that is fixed to an outer circumferential surface of the probe, and a baffle that is mounted on the support part and surrounds at least a portion of a periphery of the measuring unit. The baffle may stabilize a flow of a solution around and inside the probe and reduce a flow rate of the solution by reducing the influence of the flow outside the baffle on the flow inside the baffle. Accordingly, a deviation of the state of the solution measured by the measuring unit may be reduced.

The baffle is mounted on the support part through a link mechanism, and the link mechanism allows the baffle to be fixed at an arbitrary position between a folded position and an unfolded position while enabling the baffle to move between the folded position and the unfolded position. When mounting the device for measuring a state of a solution in a mounting hole of a reactor, the baffle may be folded, so the device for measuring a state of a solution may be installed inside the reactor through the mounting hole without increasing the size of the mounting hole. In addition, when measuring the characteristics of the solution while the device for measuring a state of a solution is mounted inside the reactor, the baffle may be unfolded, enabling the flow control of the solution over a wide area.

The baffle may be folded by pulling a second support part toward one side of the support part in a longitudinal direction with respect to a first support part, and the baffle may be unfolded by pushing the second support part toward the other side of the support part in the longitudinal direction with respect to the first support part. Therefore, it is easy to fold or unfold the baffle, and to fix the position of the baffle.

Hereinafter, exemplary embodiments of the present disclosure will be described in detail with reference to the accompanying drawings.

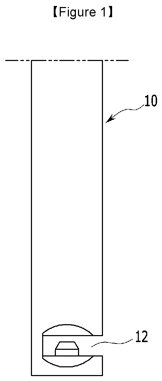

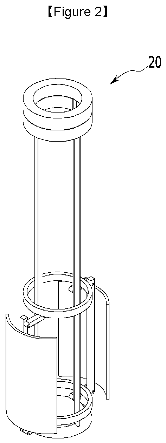

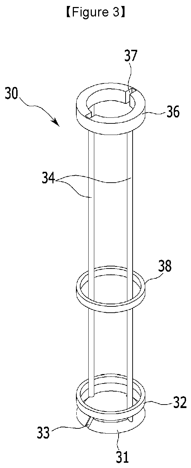

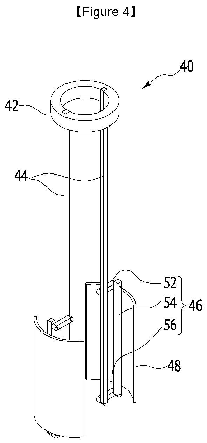

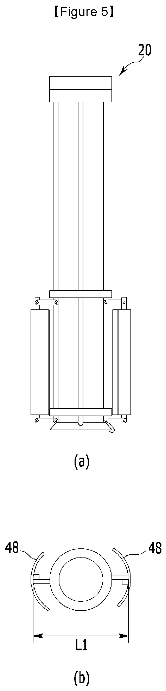

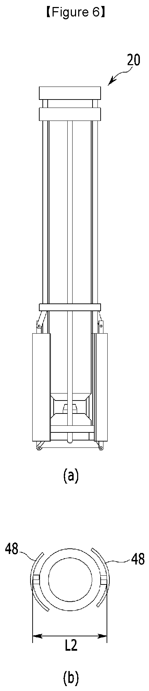

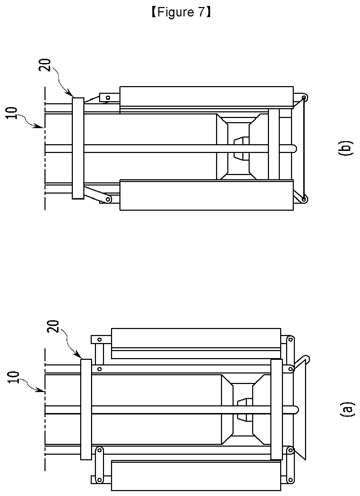

FIG. 1 is a schematic diagram of a probe according to an exemplary embodiment of the present disclosure, FIG. 2 is a perspective view of a support part of a device for measuring a state of a solution according to an exemplary embodiment of the present disclosure, FIG. 3 is a perspective view of a first support part of the support part illustrated in FIG. 2, FIG. 4 is a perspective view of a second support part of the support part illustrated in FIG. 2, FIG. 5 is a front view and a plan view illustrating an unfolded state of the support part illustrated in FIG. 2, FIG. 6 is a front view and a plan view illustrating a folded state of the support part illustrated in FIG. 2, and FIG. 7 is a schematic diagram illustrating a portion of the device for measuring a state of a solution according to an exemplary embodiment of the present disclosure in the unfolded state and folded state.

As illustrated in FIGS. 1 to 7, the device for measuring a state of a solution according to an exemplary embodiment of the present disclosure includes a probe 10, a support part 20, and a baffle 48.

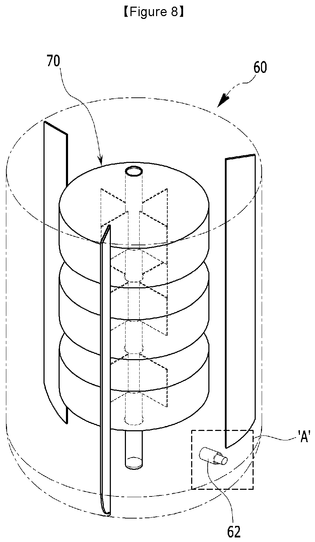

As illustrated in FIG. 1, the probe 10 is configured to measure the state (e.g., concentration, capacitance, inductance, etc.) of the solution. The probe 10 has a pillar shape, and one end portion of the probe 10 is configured to be immersed in the solution inside a reactor 60 (see FIG. 8). For example, a measuring unit 12 may be provided at one end portion of the probe 10 to measure the state of the solution existing in the measuring unit 12 or passing through the measuring unit 12. For this purpose, one end portion of the probe 10, particularly at least measuring unit 12 is arranged to be immersed in the solution. In addition, at least one surface of the measuring unit 12 is open to function as an inlet through which the solution flows into the measuring unit 12 or an outlet through which the solution flows out of the measuring unit 12. In this specification, the probe 10 is exemplified as having a cylindrical shape, but the probe 10 is not limited to the cylindrical shape.

While the probe 10 is mounted on the reactor 60, the other end portion of the probe 10 may extend to the outside of the reactor 60 and connected to a controller (not illustrated) wirelessly or by wire. Accordingly, the state of the solution measured by the measuring unit 12 may be transmitted to the controller wirelessly or by wire.

As illustrated in FIGS. 2 to 4, the support part 20 is to arrange the baffle 48 around the measuring unit 12, and may be detachably mounted on the probe 10. For example, by mounting a screw (not illustrated) on a set portion of the support part 20 and engaging the screw on an outer circumferential surface of the probe 10, the support part 20 may be detachably mounted on the probe 10.

The support part 20 is basically arranged to surround the probe 10 and may be spaced apart from the outer circumferential surface of the probe 10 by a predetermined interval. The support part 20 includes a first support part 30 and a second support part 40 that are coupled to be relatively movable to each other.

As illustrated in FIG. 3, the first support part 30 surrounds the outer circumferential surface of the probe 10 and is detachably mounted on the outer circumferential surface of the probe 10 to be spaced apart from by a predetermined interval. The first support part 30 includes a support plate 31, first, second, and third fixing rings 32, 36, and 38 that are spaced apart from each other in a longitudinal direction of the support part 20, and at least one first support pillar 34 that is simultaneously connected to the support plate 31 and the first, second, and third fixing rings 32, 36, and 38 to connect the support plate 31 and the first, second, and third fixing rings 32, 36, and 38 to each other.

The support plate 31 is generally a disk shape and defines one end of the first support part 30. When the probe 10 is inserted into and mounted in the support part 20, the support plate 31 supports one end of the probe 10 to prevent the probe 10 from being detached from the support part 20 to one side. The support plate 31 is coupled to one end of the first support pillar 34, and a first pillar groove 33 is formed at a position on a side surface of the support plate 31 that is different from the first support pillar 34 in a circumferential direction. The side surface of the support plate 31 may be formed as an inclined surface to position the baffle 48 at the folded position. For example, a diameter of the side surface of the support plate 31 may increase toward one side of the support part 20 in the longitudinal direction.

The first fixing ring 32 is arranged to be spaced apart from the support plate 31 near the support plate 31. The first fixing ring 32 is annular, and the diameter of an inner circumferential surface of the first fixing ring 32 may be slightly larger than the diameter of the outer circumferential surface of the probe 10, for example, by about 1 mm to 5 mm, so that the probe 10 is arranged within the first fixing ring 32. The first fixing ring 32 may be coupled to the first support pillar 34 so that the position is fixed in the longitudinal direction of the support part 20. For example, the first support pillar 34 may be attached to the inner circumferential surface of the first fixing ring 32.

The second fixing ring 36 is spaced apart from the first fixing ring 32 to the other side along the longitudinal direction of the support part 20, and defines the other end of the first support part 30. A distance between the support plate 31 and the second fixing ring 36 is generally equal to the length of the probe 10. For example, the distance between the support plate 31 and the second fixing ring 36, i.e., the length of the first support part 30, is not limited thereto, but may be about 200 mm to 300 mm. The second fixing ring 36 is annular, and the diameter of an inner circumferential surface of the second fixing ring 36 may be similar to or slightly larger than the diameter of the outer circumferential surface of the probe 10 (e.g., by 0.5 mm to 5 mm) so that the probe 10 may pass through the second fixing ring 36 and be inserted into the support part 20. The other end of the first support pillar 34 is coupled to the second fixing ring 36, and a second pillar groove 37 is formed on the inner circumferential surface of the second fixing ring 36 which is different from the first support pillar 34 in the circumferential direction. The second pillar groove 37 is positioned to correspond to the first pillar groove 33 in the circumferential direction. Meanwhile, the support part 20 may be detachably mounted on the probe 10 by coupling a screw penetrating through the second fixing ring 36 to the outer circumferential surface of the probe 10, but is not limited thereto.

At least one third fixing ring 38 is arranged between the first fixing ring 32 and the second fixing ring 36. The third fixing ring 38 is annular, and the diameter of an inner circumferential surface of the third fixing ring 38 may be slightly larger than the diameter of the outer circumferential surface of the probe 10, for example, by about 1 mm to 5 mm, so that the probe 10 is arranged within the third fixing ring 38. In one example, the diameter of the third fixing ring 38 may be the same as the diameter of the first fixing ring 32. The third fixing ring 38 may be coupled to the first support pillar 34 so that the position may be fixed in the longitudinal direction of the support part 20, and may reinforce the connection between the first fixing ring 32 and the second fixing ring 36 through the first support pillar 34. For example, the first support pillar 34 may be attached to the inner circumferential surface of the third fixing ring 38.

By connecting the support plates 31 spaced apart from each other in the longitudinal direction of the support part 20 to the first, second, and third fixing rings 32, 36, and 38 by the first support pillar 34, the first support part 30 is formed as a roughly cylindrical skeleton, and the probe 10 is mounted within the first support part 30, that is, within a space formed by the first, second, and third fixing rings 32, 36, and 38 and the first support pillar 34. By forming the first support part 30 as the cylindrical skeleton, the probe 10 is stably held, and at the same time, the flow of the solution around the probe 10 is not impeded. That is, the inflow of the solution into the measuring unit 12 of the probe 10 and the outflow of the solution from the measuring unit 12 of the probe 10 are hardly impeded by the first support part 30.

As illustrated in FIG. 4, the second support part 40 is coupled to the first support part 30 to be slidable in the longitudinal direction of the support part 20 with respect to the first support part 30. The second support part 40 includes a ring handle 42, at least one second support pillar 44, and a link mechanism 46.

The ring handle 42 is formed in an annular shape and is arranged on the other side of the second fixing ring 36 in the longitudinal direction of the support part 20. As illustrated in FIG. 5, the ring handle 42 may come into contact with the second fixing ring 36 while the baffle 48 is unfolded, and as illustrated in FIG. 6, separated from the second fixing ring 36 while the baffle 48 is folded. The user may push the ring handle 42 toward the second fixing ring 36 to unfold the baffle 48, and may pull the ring handle 42 to be away from the second fixing ring 36 to fold the baffle 48. The shape and size of the ring handle 42 are not limited thereto, but may be the same as the shape and size of the second fixing ring 36.

At least one second support pillar 44 is coupled to the ring handle 42 and extends in the longitudinal direction of the support part 20. One end of the second support pillar 44 passes through the second pillar groove 37 of the second fixing ring 36 to be seated in the first pillar groove 33 of the support plate 31. In one example, the second support pillar 44 may pass through the second pillar groove 37 and contact the inner circumferential surfaces of the first and third fixing rings 32 and 38. In this case, the first and third fixing rings 32 and 38 guide the second support pillar 44 sliding on the inner circumferential surface thereof. The other end of the second support pillar 44 is coupled to the ring handle 42.

The link mechanism 46 is configured to be mounted on one end portion of the second support pillar 44 and move the baffle 48 between the folded state and the unfolded state. That is, the link mechanism 46 may adjust a size of an area where the flow is controlled by folding or unfolding the baffle 48 around the measuring unit 12 of the probe 10. In addition, the link mechanism 46 is configured to fix the baffle 48 at any position between the folded position and the unfolded position. Therefore, the distance between the baffle 48 and the probe 10 may be adjusted between a distance between the baffle 48 and the probe 10 at the folded position and a distance between the baffle 48 and the probe 10 at the unfolded position.

In one example, the link mechanism 46 may be implemented as a 4-bar link, but is not limited thereto. More specifically, the link mechanism 46 includes first, second, and third links 52, 54, and 56. The first link 52 and the third link 56 are mounted to be spaced apart from each other on one end of the second support pillar 44.

The first link 52 is mounted on the second support pillar 44 to be adjacent to the third fixing ring 38 and to be rotatable about a direction perpendicular to the longitudinal direction of the second support pillar 44 on one side of the third fixing ring 38. Accordingly, when the second support pillar 44 moves to the other side of the support part 20 in the longitudinal direction, the first link 52 is caught by the third fixing ring 38 and rotates clockwise.

The third link 56 is mounted on the second support pillar 44 to be rotatable similarly to the first link 52 between the support plate 31 and the first fixing ring 32 (i.e., to be rotatable about a direction perpendicular to the longitudinal direction of the second support pillar 44). Accordingly, when the second support pillar 44 moves to the other side of the support part 20 in the longitudinal direction, the first link 56 is caught by the first fixing ring 32 and rotates clockwise. In this case, the third link 56 may be seated in the first pillar groove 33 formed on a side surface of the support plate 31. In one example, when the second support part 40 slides with respect to the first support part 30 in the longitudinal direction of the support part 20, the first link 52 and the third link 56 may rotate by the same angle.

The second link 54 is rotatably mounted on each of the first link 52 and the third link 56 so that the first link 52 and the third link 56 are connected to each other to rotate in a similar manner. The second link 54 is mounted with the baffle 48, and the baffle 48 moves together with the second link 54. The second link 54 may be connected to the first and third links 52 and 56 so that it is always parallel to the longitudinal direction of the support part 20 while the first and third links 52 and 56 rotate. Accordingly, the baffle 48 may change its position while always being parallel to the longitudinal direction of the support part 20 (i.e., the distance between the baffle 48 and the probe 10 may change).

The baffle 48 is mounted on one end portion of the support part 20, particularly the second support part 40, through the link mechanism 46. The baffle 48 surrounds at least a portion of the probe 10, particularly the measuring unit 12, to impede the flow of the solution around the measuring unit 12. That is, the baffle 48 reduces the influence of the flow outside the baffle 48, which is directly affected by an operation of a stirring device, on the flow around the measuring unit 12 inside the baffle 48, thereby stabilizing the flow of the solution around the measuring unit 12 or inside the measuring unit 12 and reducing the flow rate of the solution. For this purpose, the baffle 48 may be generally rectangular plate curved to surround the probe 10. For example, the baffle 48 may have a width of 25 mm to 35 mm and a height of 35 mm to 45 mm.

In one example, a pair of baffles 48 may be arranged to face each other around the probe 10. In addition, a space between the pair of baffles 48 is open so that the solution in the reactor 60 may flow between the inside and the outside of the baffles 48 through the space. Each of the pair of baffles 48 is attached to the second link 54. To this end, the device for measuring a state of a solution includes a pair of second support pillars 44 and a pair of link mechanisms 46. Here, each link mechanism 46 is mounted on the corresponding second support pillar 44.

As illustrated in FIGS. 5(a) and 7(a), when a user pushes the second support part 40 to one side of the support part 20 in the longitudinal direction, one end of the pair of second support pillars 44 comes into contact with the support plate 31, and the first and third links 52 and 56 are arranged radially. Accordingly, the second link 54 connected to the first and third links 52 and 56 is positioned farthest from the probe 10, and the baffle 48 attached to the second link 54 is positioned at the unfolded position. In this case, a distance L1 between the pair of baffles 48 becomes maximum, and thus, the flow control of the solution is possible over the widest possible area. For example, the distance L1 between the pair of baffles 48 in the unfolded state may be 35 mm to 45 mm.

As illustrated in FIGS. 6(b) and 7(b), when the user pulls the second support part 40 toward the other side of the support part 20 in the longitudinal direction, the pair of second support pillars 44 moves toward the other side in the longitudinal side, but the first link 52 is caught by the third fixing ring 38 to rotate clockwise, and the third link 56 is caught by the first fixing ring 32 to rotate clockwise, and is seated in the first pillar groove 33 of the support plate 31. When the third link 56 is completely seated in the first pillar groove 33, the second support part 40 no longer moves toward the other side in the longitudinal direction, the second link 54 is positioned closest to the probe 10, and the baffle 48 attached to the second link 54 is positioned at the folded position. In this case, a distance L2 between the pair of baffles 48 becomes minimum. While the baffle 48 is folded, the device for measuring a state of a solution may be mounted inside the reactor 60 through a mounting hole 62 having a limited size. For example, the distance L2 between the pair of baffles 48 in the folded state may be 15 mm to 25 mm.

Hereinafter, a process of mounting the device for measuring a state of a solution according to an exemplary embodiment of the present disclosure on the reactor 60 will be briefly described.

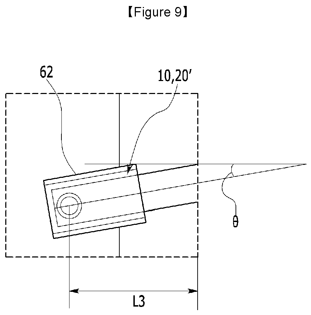

FIG. 8 is a schematic diagram illustrating that the device for measuring a state of a solution according to an exemplary embodiment of the present disclosure is mounted on the reactor. FIG. 9 is an enlarged view of part 'A' of FIG. 8.

As illustrated in FIGS. 8 and 9, the reactor 60 has a hollow cylindrical shape, and E. coli is cultured and fermented in a culture medium inside the reactor 60. A stirring device 70 is mounted in a center of the reactor 60, and the stirring device 70 may supply oxygen to the E. coli in the culture medium by stirring the culture medium. The mounting hole 62 is formed at a lower portion of a side surface of the reactor 60, and the device for measuring a state of a solution is mounted inside the reactor 60 through the mounting hole 62.

In order to mount the device for measuring a state of a solution inside the reactor 60, as illustrated in FIG. 6, the user holds the ring handle 42 and pulls the second support part 40 to the other side of the support part 20 in the longitudinal direction to fold the baffle 48. Thereafter, the device for measuring a state of a solution is inserted into the mounting hole 62 while the baffle 48 is folded. Since the distance L2 between the pair of baffles 48 is minimum while the baffle 48 is folded, the device for measuring a state of a solution may be mounted inside the reactor 60 through the mounting hole 62 having the limited size.

In this case, a mounting depth L3 of the measuring unit 12 in a horizontal direction is a depth at which the entire baffle 48 passes through the mounting hole 62 and is positioned inside the reactor 60. For example, the mounting depth L3 of the measuring unit 12 in the horizontal direction may be, but is not limited to, about 50 mm to 200 mm. In addition, the device for measuring a state of a solution may be mounted to be inclined downward by a set angle θ with respect to the horizontal direction. Here, the set angle θ is not limited thereto, but may be about 5° to 15°. By mounting the device for measuring a state of a solution to be inclined downward by about 5° to 15° with respect to the horizontal direction, the mounting of the device for measuring a state of a solution through the mounting hole 62 may be easy, the solution may be smoothly entered into and exited from the measuring unit 12, and the flow influence by the stirring device 70 may be reduced.

After the device for measuring a state of a solution is mounted inside the reactor 60, as illustrated in FIG. 6, the user holds the ring handle 42 and pulls the second support part 40 to the other side of the support part 20 in the longitudinal direction to unfold the baffle 48. Accordingly, the distance L1 between the pair of baffles 48 becomes maximum, and thus, the flow control of the solution is possible over the widest possible area. Therefore, it is possible to stabilize the flow of the solution around the measuring unit 12 or within the measuring unit 12 and reduce the flow rate of the solution.

Hereinafter, the effect of the device for measuring a state of a solution according to the exemplary embodiment of the present disclosure will be described.

In order to confirm the effect of the device for measuring a state of a solution, flow analysis was performed in a 300 L bench scale reactor. A 3-stage Rushton turbine is installed in the 300 L reactor to stir the culture medium, and the device for measuring a state of a solution is installed at a position corresponding to the lower 1-stage turbine. The mounting depth L3 of the measuring unit 12 is about 100 mm, and the device for measuring a state of a solution is mounted to be inclined downward with respect to the horizontal direction by about 10°. In addition, a stirring speed of the stirring device 70 is set to 300 RPM.

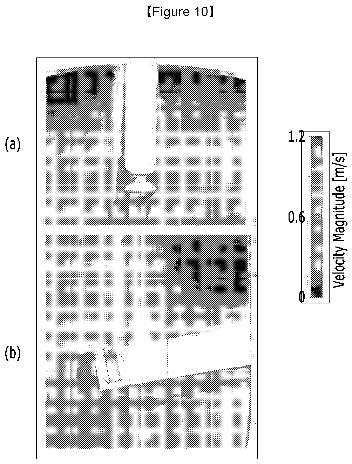

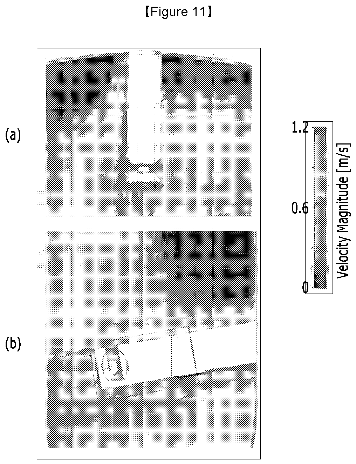

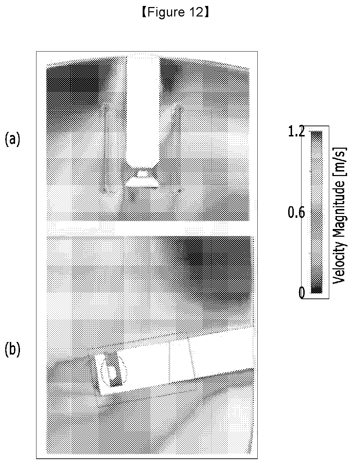

FIG. 10 is a diagram illustrating a flow rate around a probe when a device for measuring a state of a solution according to the related art is mounted on a reactor. FIG. 11 is a diagram illustrating a flow rate around a probe when the device for measuring a state of a solution according to an exemplary embodiment is mounted on a reactor and a baffle is folded. FIG. 12 is a diagram illustrating the flow rate around the probe when the device for measuring a state of a solution according to an exemplary embodiment of the present disclosure is mounted on the reactor and the baffle is unfolded. FIGS. 10(a) to 12(a) illustrate the flow rate around the probe in a plan view, and FIGS. 10(b) to 12(b) illustrate the flow rate around the probe in a side view.

As illustrated in FIG. 10, when only the probe is mounted inside the reactor without the support part, a maximum flow rate inside the measuring unit is 1.17 m/s, and an average flow rate inside the measuring unit is 0.56 m/s.

As illustrated in FIG. 11, when the device for measuring a state of a solution is mounted inside the reactor 60 and the baffle 48 is folded, the maximum flow rate inside the measuring unit 12 is 1.00 m/s and the average flow rate inside the measuring unit 12 is 0.33 m/s. That is, even when the baffle 48 of the device for measuring a state of a solution mounted inside the reactor 60 is folded, the maximum flow rate inside the measuring unit 12 is reduced by about 15% and the average flow rate inside the measuring unit 12 is reduced by about 41% compared to when the conventional device for measuring a state of a solution is mounted inside the reactor. That is, even when the baffle 48 is folded, it is possible to stabilize the flow of the solution around and inside the measuring unit 12 and reduce the flow rate.

As illustrated in FIG. 12, when the device for measuring a state of a solution is mounted inside the reactor 60 and the baffle 48 is unfolded, the maximum flow rate inside the measuring unit 12 is 0.94m/s and the average flow rate inside the measuring unit 12 is 0.3m/s. That is, even when the baffle 48 of the device for measuring a state of a solution mounted inside the reactor 60 is unfolded, the maximum flow rate inside the measuring unit 12 is reduced by about 20% and the average flow rate inside the measuring unit 12 is reduced by about 46% compared to when the conventional device for measuring a state of a solution is mounted inside the reactor. That is, while the baffle 48 is unfolded, the flow of the solution around and inside the measuring unit 12 may be stabilized as much as possible and the flow rate may be reduced as much as possible.

While this invention has been described in connection with what is presently considered to be practical embodiments, it is to be understood that the invention is not limited to the disclosed embodiments. On the contrary, it is intended to cover various modifications and equivalent arrangements included within the spirit and scope of the appended claims.

## Claims

1. A device for measuring a state of a solution, comprising:
a probe having a measuring unit having at least one surface open to measure characteristics of the solution;
a support part fixed to an outer circumferential surface of the probe; and
a baffle configured to be mounted on the support part and surround at least a portion of a periphery of the measuring unit and prevent a flow of the solution around the measuring unit,
wherein the baffle is mounted on the support part via a link mechanism, and
a distance between the probe and the baffle is adjustable by the link mechanism.

2. The device for measuring a state of a solution of claim 1, wherein:
the support part includes first and second support parts that are coupled to each other to be relatively movable in a longitudinal direction thereof,
the first support part is detachably fixed to the outer circumferential surface of the probe, and
the second support part slides in the longitudinal direction with respect to the first support part to move the baffle between a folded position and an unfolded position via the link mechanism.

3. The device for measuring a state of a solution of claim 2, wherein:
the first support part includes:
a support plate configured to define one end of the first support part and support one end of the probe to prevent the probe from being separated to one side;
at least one fixing ring configured to be arranged spaced apart from each other on the other side of the support plate and guide sliding of the second support part; and
a first support pillar connected to the support plate and the at least one fixing ring to connect the support plate and the at least one fixing ring to each other.

4. The device for measuring a state of a solution of claim 3, wherein:
the at least one fixing ring includes:
a first fixing ring arranged spaced apart from the support plate near the support plate;
a second fixing ring defining the other end of the first support part; and
a third fixing ring arranged between the first fixing ring and the second fixing ring.

5. The device for measuring a state of a solution of claim 4, wherein:
a first pillar groove is formed at a position on a side surface of the support plate that is different from the first support pillar in a circumferential direction, and
a second pillar groove is formed on an inner circumferential surface of the second fixing ring corresponding to the first pillar groove in the circumferential direction.

6. The device for measuring a state of a solution of claim 5, wherein:
the side surface of the support plate is formed as an inclined surface.

7. The device for measuring a state of a solution of claim 3, wherein:
the second support part includes:
a ring handle arranged on the other side of a fixing ring on the most other side of the at least one fixing ring; and
a second support pillar coupled to the ring handle, and extending to one side in the longitudinal direction to be guided by the at least one fixing ring, and
the link mechanism is configured to be mounted on the second support pillar and move the baffle between the folded position and the unfolded position.

8. The device for measuring a state of a solution of claim 7, wherein:
the link mechanism is mounted on the second support pillar
so that when the ring handle is pushed to contact the fixing ring on the most other side, the baffle is positioned at the unfolded position, and
when the ring handle is pulled to be separated from the fixing ring on the most other side, the baffle is positioned at the folded position.

9. The device for measuring a state of a solution of claim 8, wherein:
the link mechanism includes:
a first link mounted on the second support pillar to be rotatable about a direction perpendicular to a longitudinal direction of the second support pillar;
a second link rotatably mounted on the first link and having the baffle mounted thereon; and
a third link spaced apart from the first link and arranged adjacent to the support plate, and rotatably connected to the second link and the second support pillar, respectively.

10. The device for measuring a state of a solution of claim 9, wherein:
at least one of the first and third links is caught by at least one of the at least one fixing ring to position the baffle at the unfolded position.

11. The device for measuring a state of a solution of claim 9, wherein:
the third link positions the baffle at the folded position by the support plate.

12. The device for measuring a state of a solution of claim 2, wherein:
the probe is mounted in a reactor through a mounting hole with the support part mounted on the outer circumferential surface thereof, and
the probe is inserted into the mounting hole at the position where the baffle is folded, and the probe is positioned at the position where the baffle is unfolded while mounted in the reactor, so the measuring unit is configured to measure the characteristics of the solution.
